# EUROPEAN PATENT APPLICATION

(11) **EP 1 818 137 A1**
(43) Date of publication of application: **15.08.2007**
(21) Application number: 07106146.9
(22) Date of filing: 30.03.2006
(51) Int. Cl.: B23Q 1/54, B23Q 3/157

(54) **Combined processing machine and processing method using the same**

(30) Priority: 01.04.2005 JP 2005106041
(62) Divisional of application: 06111991.3
(71) Applicant: JTEKT CORPORATION, Chuo-ku Osaka-shi Osaka 542-8502 (JP)
(72) Inventor: Wakazono, Yoshio, Osaka-shi, Osaka 542-8502 (JP)
(74) Representative: TBK-Patent

(57) **Abstract**

A combined processing machine comprises a bed, a workpiece support mounted to the bed and a tool spindle unit (200) including a tool spindle adapted to clamp a tool (501). A plurality of tools (501a,501b) are adapted to be clamped by the tool spindle, wherein the plurality of tools include forming, heat treatment and finishing tools.

## Description

### BACKGROUND OF THE INVENTION

### 1. Field of the Invention

This invention relates to a combined processing machine and a processing method using the same.

### 2. Discussion of the background

Among conventional machine tools, there are selected and used a turning machine, a drilling machine, a boring machine, a milling machine, a planing machine, a broaching machine, a grinding machine, etc. which are selected according to appropriateness for the process to be applied to a workpiece. Also, a combined processing machine is conventionally used.

Japanese laid-open patent application publication JP-2002-160133-A discloses a combined processing machine which is able to cut and grind a workpiece using the same machine. The combined processing machine has two tool posts whose spindles respectively mount a grinding wheel and a cutting tool turret. By indexing the turret, one of the processes (cutting or grinding) is selected. However, the tools are respectively put on the two tool posts so that it is hard to downsize the machine and the ability to minimize the floor space for the machine is limited.

The other combined processing machine is disclosed in Japanese patent application publication JP-07-061585-B. The combined processing machine has plural turrets with plural tools which are changed and/or indexed according to a programmed machining process, e.g. lathing, milling, drilling and grinding, with controlling X, Y and Z axis-traverse. There is only one spindle head for the tools so that the machine is downsized. However, the spindle head is heavy because of the plural tools thereon. Thus it is hard to control an XYZ stage and it is also hard to machine the workpiece rapidly and precisely.

On the other hand, there is a recent process called hard turning which lathes a workpiece after heat treatment. However, it is preferable that there takes place a rough machining with large machining allowance before the heat treatment and a finish machining with precision after the heat treatment. Therefore, it is still common that the workpiece is lathed by the turning machine, heat treated by a thermal treatment equipment and ground by the grinding machine sequentially.

### SUMMARY OF THE INVENTION

In view of the foregoing, it is an object of the present invention to provide a combined processing machine which is applicable to plural processes.

In order to further the above and other objects, a combined processing machine comprises a bed, a workpiece support mounted to the bed, a tool spindle unit including a tool spindle adapted to clamp a tool, a plurality of tools adapted to be clamped by the tool spindle, and a linkage connecting the tool spindle unit to the bed for movement with multi-degrees of freedom.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
Fig. 1 is a plan view of a combined processing machine of an embodiment related to the invention;
Fig. 2 is a front view of the embodiment as seen behind a head stock;
Fig. 3 shows plan and front views of the embodiment when tools are changed;
Figs. 4(a)-4(b) show explanatory drawings of the embodiment when one of the tools is returned;
Figs. 5(a)-5(d) show explanatory drawings of the embodiment when one of the tools is attached;
Figs. 6(a)-6(b) show a lathing process of the embodiment;
Fig. 7 shows a heat treatment process of the embodiment;
Fig. 8 shows a cutting process of the embodiment;
Fig. 9 shows a grinding process of the embodiment; and,
Figs.10(a)-10(f) show sequential processes of the embodiment.

### DESCRIPTION OF THE PREFERRED EMBODIMENTS

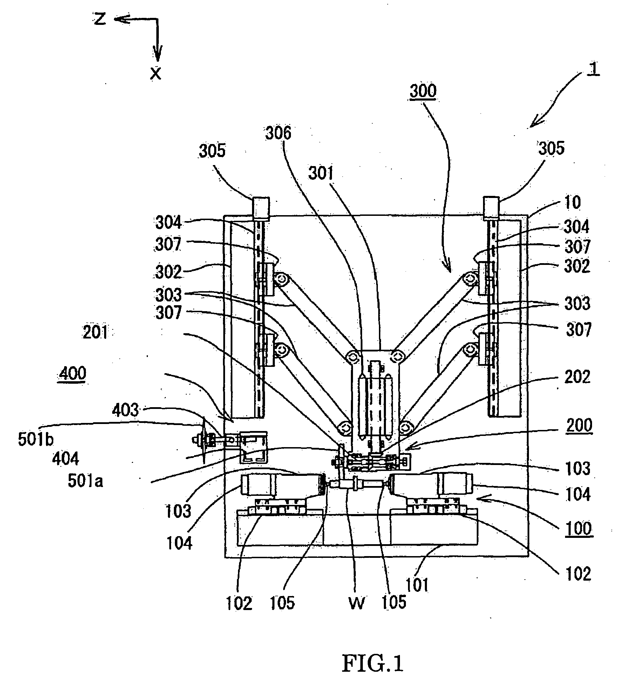

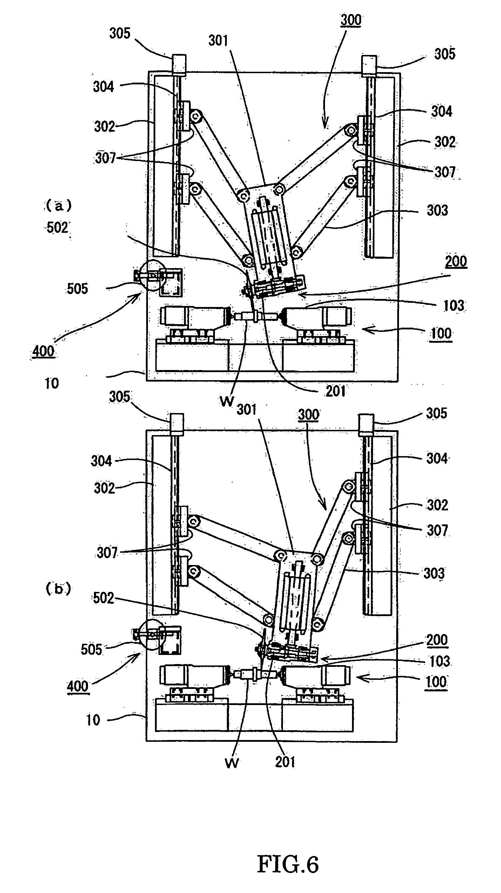

An embodiment of a combined processing machine related to the present invention will be described with reference to figures. For convenience, an explanation of the machine will be done with a view of an operator who would stand in front of the machine, the bottom of Fig.1. The X-axis is a first direction that extends from the back to the front of the machine in its depth direction, the Z-axis extends perpendicularly to the first direction from the right to the left of the machine in its width direction, and the Y-axis extends perpendicularly to the first and second directions from the bottom to the top of the machine in its height direction. In addition, Figs. 1 to 5 show tools being changed from a first tool 501a to a second tool 501b, and Figs. 6 to 10 show processes of lathing with a lathing tool 502, of cutting with a cutting tool 503, of heat treatment with a heat treatment tool 504, of grinding with a grinding tool 505 and of surface finishing with a surface finishing tool 506 by changing the tools 502-506.

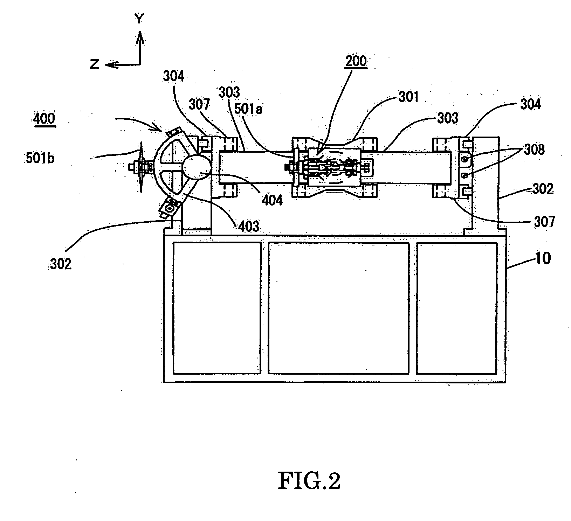

Fig.1 shows a plan view of the combined processing machine 1 of the embodiment and Fig. 2 shows a front view of the combined processing machine 1 behind a head stock 103. The combined processing machine 1 is controlled by a computer numerical controller (CNC). The combined processing machine 1 comprises some attachments, e.g. a laser oscillator, an oil supplier, a cooling element, an air supplier, a coolant supplier, a chip collector and/or a duct. The CNC and the attachments are not shown.

The combined processing machine 1 comprises a bed 10, a workpiece supporter 100, a tool spindle unit 200 as a tool supporter and a linkage 300 with multi-degrees of freedom. The workpiece supporter 100 is mounted on the bed 10 and supports a workpiece W rotatably and/or rigidly. The tool spindle unit 200 detachably supports the tools and is carried by the linkage 300 mounted on the bed 10. The linkage 300 comprises a link head 301 movable toward the workpiece W and an automatic tool changer 400 to store, serve and change the tools.

The workpiece supporter 100 has a headstock base 101 fixed on the bed 10, a pair of (right and left) headstocks 103 slidably mounted on the headstock base 101 via a pair of headstock slide guides 102, and a pair of headstock drive motors 104 respectively attached to the headstocks 103 in order to drive main spindles 105 at a CNC-controlled rotational speed. The headstocks 103 slide independently in the Z-axis and support the workpiece W therebetween.

The tool spindle unit 200 attached to the link head 301 has a tool spindle 201, a tool spindle drive motor 306 and a traction drive unit 202. The tool spindle drive motor 306 rotates a first tool 501a supported by the tool spindle 201 at a CNC-controlled speed via the traction drive unit 202. Although the traction drive unit 202 is preferable because of its small vibration, it may be replaced by another drive train, e.g. a gear drive, a belt drive or a direct drive. The tool spindle 201 has a clamp portion 203 in order to strongly engage a taper portion 510 of the first tool 501a therewith. Preferably, the clamp portion 203 has compatibility for a tooling interface, e.g. by the HSK standard.

The linkage 300 with multi-degrees of freedom is a parallel mechanism having links arranged in parallel. The linkage 300 comprises a pair of (right and left) linear guide bases 302 mounted on the bed 10, four drive mechanisms arranged on the linear guide bases 302, and four pivotal links 303 connecting the drive mechanisms with the link head 301 carrying the tool spindle unit 200. The driving mechanisms have a pair of (right and left) linear guides 304, a pair of sliders 307 slidably guided by the linear guides 304 along the X-axis respectively. The driving mechanisms further comprise four ball screws 308 and four link drive servo motors 305 in order to drive the sliders 307 independently One end of each link 303 is pivotably connected with each slider 307, and the other end is pivotably connected with a predetermined point on the link head 301. Such an arrangement permits position and attitude-control of the link head 301 with three-degrees of freedom in the X, Y and Z-axes by independent control of the sliders 307 which are position-controlled by the link drive servo motors 305. As the drive mechanisms of the linkage 300 with multi-degrees of freedom, the ball screws 308 and the link drive servo motors 305 may be replaced by linear motors in order to drive the sliders 305.

Position sensors, not shown, are attached to the linear guides 304. Each position sensor, e.g. an optical linear scale or magnetic linear scale, detects the position of each slider 307. The use of the detected signal provides position and attitude feedback-control of the link head 301 for the positions in the X and Z-axes and the rotational angle about the Y-axis. Specific points of the link head 301 or the tool spindle unit 200 may instead be detected by optical, magnetic or electric sensors. In this case, there are detected two different specific points of the link head 301 or the tool spindle unit 200 in the X and Z-axes, so that the link head 301 is position and attitude-controlled.

The first tool 501a has a predetermined shape and is fixed at a predetermined position on the tool spindle unit 200. Thus, the control of the link head 301 provides position and attitude-control of the machining point of the first tool 501a. The first tool 501a is able to be position and attitude-controlled dependent on the shape of the workpiece W, machining point, machining angle, etc.

The automatic tool changer 400 is mounted at a predetermined point of the bed 10. The automatic tool changer 400 comprises a tool turret 403 having plural tool pods 402 to serve second tools 501b and a servo motor 404 to index the turret 403 about X-axis. Each tool pod 402 has an engagement portion 406 with a ball bush 405 therein in order to receive a groove 407 formed around the tip of the first and second tools 501a and 501b. Thus, provided a predetermined force or more, each of the tools 501a and 501b is attached/removed to/from the tool pods 402. Increasing the diameter of the tool turret 403 allows for more tool pods 402.

Plural kinds of tools are able to be used as the first and second tools 501a and 501b. For example, a lathing tool 502 (an electro plated wheel or the like) used for lathing, a cutting tool 503 (a drill used for boring or groove machining, an end mill or the like), a heat treatment tool 504 (a laser beam quenching head or the like), a grinding tool 505 (a CBN wheel or the like) used for grinding and a surface finishing tool 506 used for super finishing, ELID grinding or the like. Hereinafter, the lathing tool 502 and the cutting tool 503 are collectively called forming tools because these tools are used for forming the workpiece W. And the grinding tool 505 and the surface finishing tool 506 are collectively called finishing tools because these tools provide surface roughness or accuracy of the workpiece W. Where the combined processing machine 1 requires the forming tool, the heat treatment tool and the finishing tool, one of the appropriate tools is selected for machining in a predetermined sequence by control of the tool spindle unit 200, the linkage 300 and the automatic tool changer 400.

As the lathing tool 502, there are applicable an electro plated wheel which is used with rotation and a turning tool and a spring tool which are used without rotation. The electro plated wheel has chips of cutting tool, diamond or CBN implanted in its circumferential surface by plating, e.g. nickel plating. The electro plated wheel has small tooling cost.

As the cutting tool 503, there are applicable a drill, a tap, an end mill and a milling cutter. In the neutral position, the rotational axis of the cutting tools 503 parallels the X-axis and the rotational axis of the tool spindle drive motor 306 parallels the Z-axis. The rotation of the tool spindle 201 is converted via a bevel gear mechanism from the rotation of the tool spindle drive motor 306. Instead, a drive motor may be built in each cutting tool 503.

The heat treatment tool 504 (the laser beam quenching head or the like) irradiates a laser beam with high density energy. For example, a carbon dioxide laser or semiconductor laser is used for the heat treatment. The laser beam is supplied through a laser array or the like. The source of the laser beam may be arranged in the heat treatment tool 504. Instead, where the source is arranged outside of the heat treatment tool 504 (e.g. on the bed 10), the laser beam is collimated by a collimator and is condensed by a condenser lens which is position-controlled in the heat treatment tool 504 so that the condensed laser beam is supplied to the treatment point. While the heat treatment tool 504 is used, the tool spindle drive motor 306 does not rotate. The tool spindle unit 200 preferably has a brake to keep the tool spindle 201 from rotating. For example, the tool spindle drive motor 306 has large stationary torque, or the controller has large servo rigidity. For non-rotating tools like the heat treatment tool 504, the tool spindle unit 200 may have a tool attachment in order to fix the first or second tools 501a/501b.

The grinding tool 505 used for grinding has cubic boron nitride (CBN) grains so as to grind the workpiece W precisely. The surface finishing tool 506 preferably includes an ultrasonic generator which makes the surface finishing tool 506 vibrate in order to obtain a smooth surface. For the ELID grinding, the surface finishing tool 506 is preferably made from a grinding wheel which has diamond grains bonded to each other by a cast binder, and there is preferably provided an electrolyte supplier.

### Automatic tool change

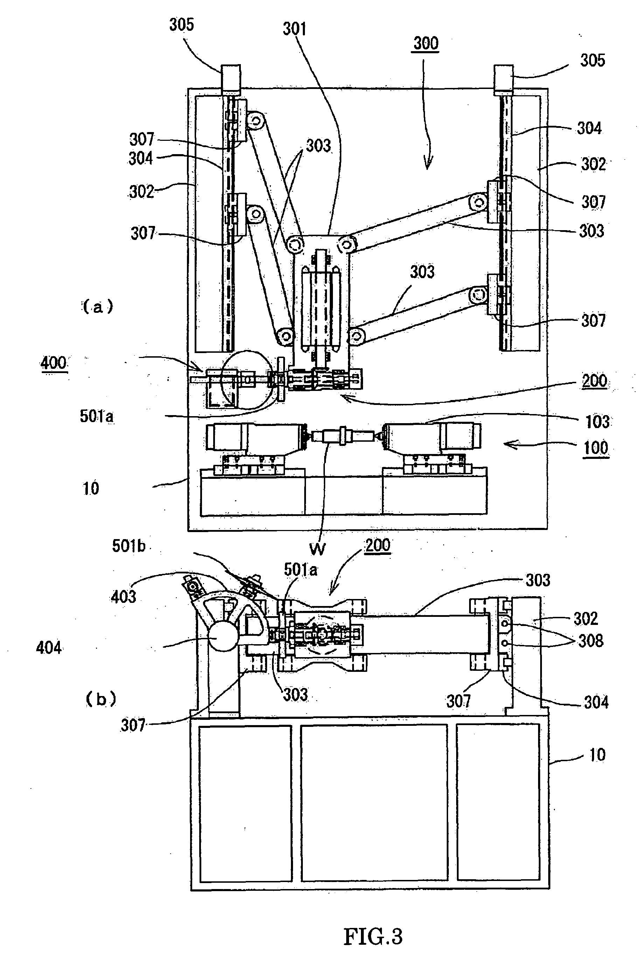

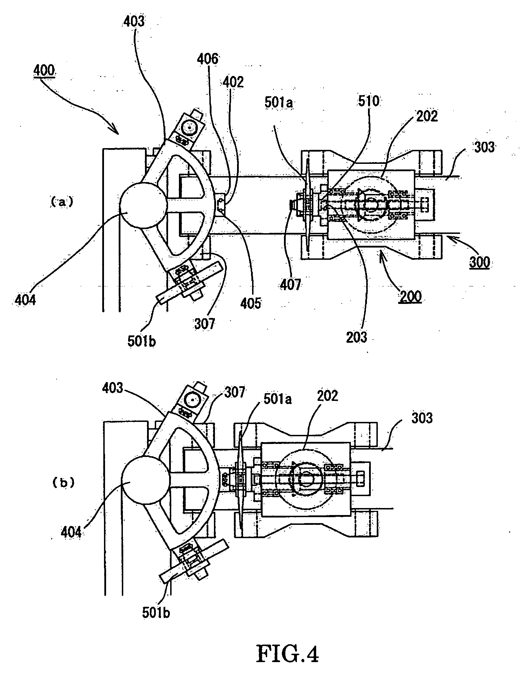

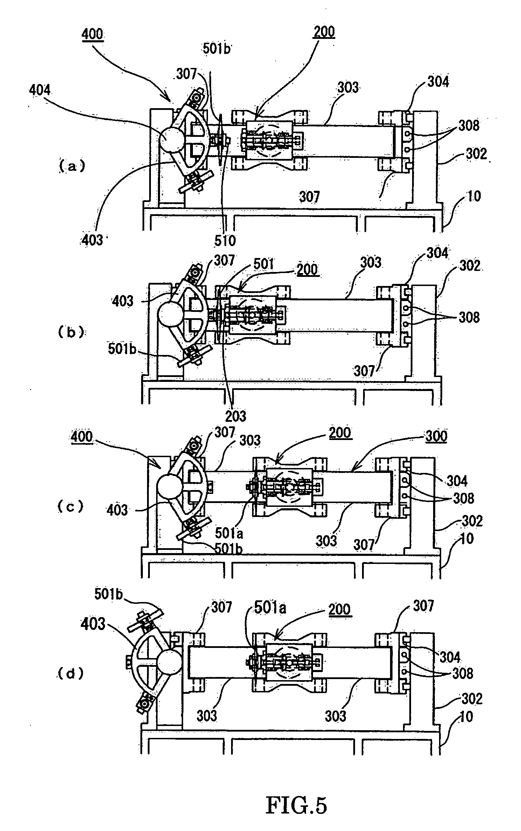

Fig. 3 shows a positional relationship between the tool spindle unit 200 and the automatic tool changer 400 while exchanging the first tool 501a for the second tool 501b. Figs. 4(a)-4(b) show the first tool 501a being removed from the tool spindle unit 200 and attached to the tool turret 403. Figs. 5(a)-5(d) show the second tool 501b being attached to the tool spindle unit 200.

The linkage with multi-degrees of freedom 300 transfers the tool spindle unit 200 to the predetermined position where the first tool 501a is able to be removed. The predetermined position is decided by the positional relationship between the groove 407 formed around the tip of the first tools 501a and the engagement portion 406 with a ball bush 405 in the tool pod 402. Each tool has its own predetermined position for the tool change so that each tool change position is stored in the controller.

Figs. 4(a)-4(b) are explanatory drawings that show how to return the first tool 501a to the tool turret 403. Before the next process (cutting, grinding, heat treatment or etc.), the first tool 501a is returned from the tool spindle unit 200 to the tool turret 403. The linkage 300 transfers the tool spindle unit 200 to the predetermined point (Fig. 4 (a)) and then inserts the tip of the first tool 501a into the engagement portion 406 with the predetermined force or more (Fig. 4(b)). Next, the ball bush 405 of the engagement portion 406 holds the groove 407 formed at the tip of the first tool 501a with the predetermined force. Then, the clamp portion 203 of the tool spindle unit 200 releases the taper portion 510. Finally, the tool spindle unit 200 is moved away from the automatic tool changer 400 by the linkage 300.

Figs. 5(a)-5(d) are explanatory drawings that show how to set the second tool 501b to the tool spindle unit 200. The tool spindle unit 200 stays where it has been moved away from the automatic tool changer 400. The servo motor 404 indexes one of the tool pods 402 of the tool turret 403 which serves the second tool 501b (Fig. 5(a)). Next, the tool spindle unit 200 approaches the second tool 501b, and then the taper portion 510 of the second tool 501b is clamped by the clamp portion 203 of the tool spindle unit 200. Where the clamp portion 203 is formed by the tooling interface of the HSK standard for machining centers, the second tool 501b is strongly engaged with the tool spindle unit 200 by double fit of the taper portion 510 and the end face of the second tool 501b (Fig. 5(b)). After the clamping, the tool spindle unit 200 is moved away from the automatic tool changer 400 to an initial position for the next process by the linkage 300 (Fig. 5(c)). Then, the tool turret 403 rotates and returns to an idle position, whereby the tool change operation is completed (Fig. 5(d)).

Hereinafter, there will be described processes by using of the lathing tool 502, the cutting tool 503, the heat treatment tool 504, the grinding tool 505 and the surface finishing tool 506. And there will not be used the general terms of the first tool 501a and the second tool 501b.

### Lathing

Figs. 6(a)-6(b) show the lathing process of the workpiece W by using the lathing tool 502 of the electro plated wheel attached to the tool spindle unit 200. Where the electro plated wheel is rotated at high speed by the tool spindle unit 200 and lathes the workpiece W, the tool wear ratio becomes 1/10 or less and the tool cost becomes approximately one half that of the conventional lathing tool. When lathing the face of the workpiece W, the lathing tool 502 is revolved about the Y-axis by the linkage 300. As shown in Figs. 6a-6b, both right and left side faces of the workpiece W are lathed by revolving the lathing tool 502. Besides, the lathing tool 502 is able to be appropriately position and attitude-controlled for lathing by the linkage 300.

### Heat treatment

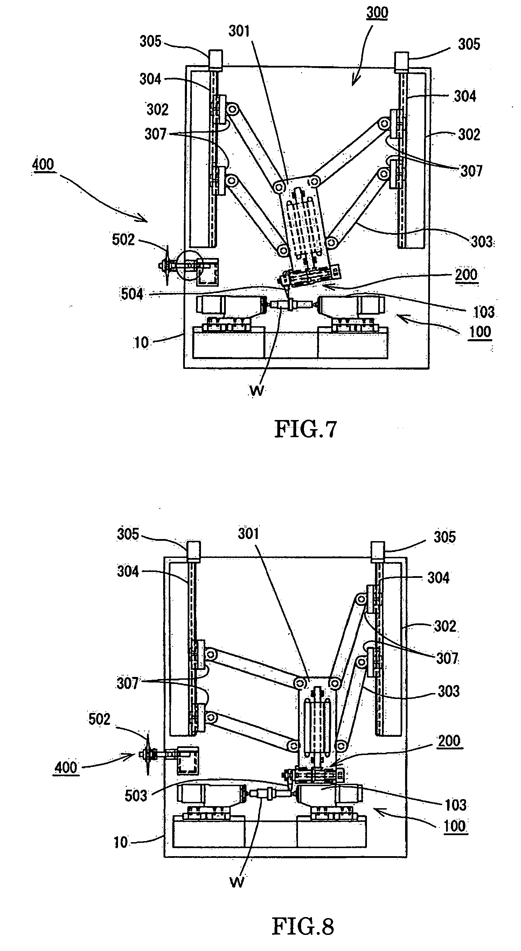

Fig. 7 shows the heat treatment process of the workpiece W by using the heat treatment tool 504 of the laser beam quenching head attached to the tool spindle unit 200. Where the laser beam quenching is required, the surface of the workpiece W is irradiated by the laser beam with high density energy. A small circle of a laser beam spot on the surface of the workpiece W heats and quenches the surface of the workpiece W around the laser beam spot. Because the laser beam spot is moved relative to the workpiece W by the rotation of the workpiece W, the heated area is rapidly cooled down and is completely tempered without an additional tempering process. By being moved along the Z-axis by the linkage 300, the heat treatment tool 504 is longitudinally able to generally quench the workpiece W. Where the heat condition of the laser beam is changed, a variety of heat treatment, e.g. tempering, is able to take place. In the case that the workpiece W is a resin, a variety of heat treatment, e.g. refining the surface of the workpiece W, is able to be done by irradiating a shortwave laser beam. Where the heat treatment tool 504 is used, the tool spindle 201 of the tool spindle unit 200 does not rotate.

### Boring, Groove machining

Fig. 8 shows the boring or groove machining process of the workpiece W by using the cutting tool 503 attached to the tool spindle unit 200. In the boring process, the drill as the cutting tool 503 is attached to the tool spindle unit 200. The drill is driven by the tool spindle drive motor 306 or a separate motor and bores the workpiece W which is not rotated. In the groove machining process, the end mill as the cutting tool 501 is attached to the tool spindle unit 200. The end mill advances to the workpiece W and moves in the direction of the groove machining.

### Grinding

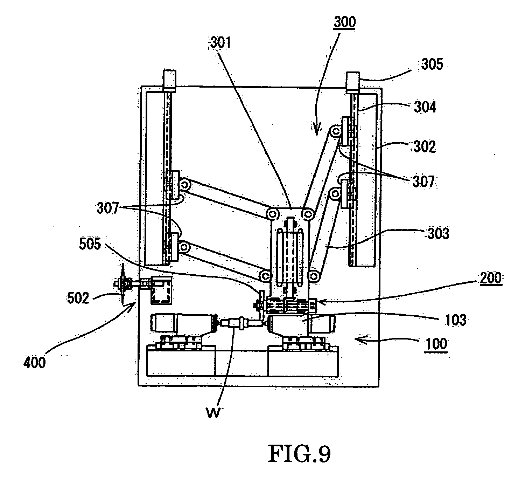

Fig. 9 shows the grinding process of the workpiece W by using a grinding wheel, e.g. a CBN wheel, as the grinding tool 505 attached to the tool spindle unit 200. In the grinding process, as shown in Fig. 9, the grinding wheel contacts the workpiece W perpendicularly. Similar to the lathing process shown in Fig. 6, an angular grinding is able to be performed. Because the linkage 300 has multi-degrees of freedom, the grinding tool 505 is able to revolve, advance and retract to the workpiece W with an appropriate position and attitude. Therefore, appropriate grinding takes place with the grinding tool 505. For example, gradient and various composite grinding tools would be applicable.

### Surface finishing

The surface finishing process of the workpiece W is performed by the surface finishing tool 506 attached to the tool spindle unit 200. For example, super finishing may be performed with vibrating of a grinding tool, ELID grinding with dressing in the electrolyte, lapping, polishing or buffing.

### Example of sequential processes in the embodiment

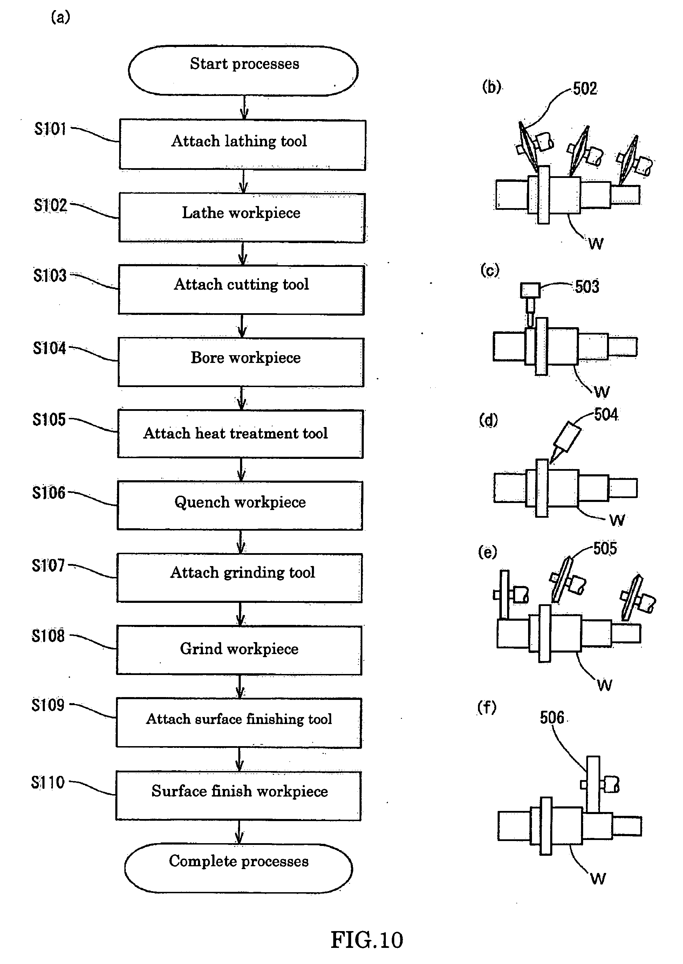

Figs. 10(a)-10(f) show a flow chart and explanatory drawings of one example of sequential processes in the embodiment. The embodiment of the combined processing machine 1 provides the lathing, boring, laser beam heat treatment, grinding and surface finishing processes with sequentially changing the tools. After the shaft-like workpiece W is set between the main spindles 105, the combined processing machine 1 starts the sequential processes.

First, the lathing process takes place. The lathing tool 502 is attached to the tool spindle unit 200 (S101), then the workpiece W is rotated at appropriate speed and is lathed with the lathing tool 502 (S102). Where the end face is lathed, the lathing tool 502 is revolved by the linkage 300 about Y-axis, as shown in Fig. 10(b). Fig. 10(b) shows plural lathing situation so that there are drawn a plurality of the lathing tool 502. Then, the lathing process is completed and the lathing tool 403 is returned to the tool turret 403.

Next, the boring process takes place. The drill of the cutting tool 503 is attached to the tool spindle unit 200 (S103). The main spindles 105 stop the rotation so as to bore the workpiece W. The drill rotates and advances to the predetermined depth of the workpiece W (S104), as shown in Fig. 10(c). Then, the boring process is completed and the cutting tool 503 is returned to the tool turret 403.

Next, the heat treatment process takes place. The heat treatment tool 504 is attached to the tool spindle unit 200 (S105). The main spindles 105 rotate the workpiece W at the predetermined speed. The heat treatment tool 504 irradiates the surface of the workpiece W with high density energy. The linkage 300 transfers the heat treatment tool in the Z-axis within a predetermined range so as to only quench a predetermined range of the workpiece W. Where the end face is quenched, the linkage 300 revolves the heat treatment tool 504 about the Y-axis (S106), as shown in Fig. 10(d). Then, the heat treatment process is completed and the heat treatment tool 504 is returned to the tool turret 403.

Next, the grinding process takes place. The grinding tool 505 is attached to the tool spindle unit 200 (S107). The main spindles 105 rotate the workpiece W at the appropriate speed depend on the material. Also, the tool spindle unit 200 rotates the grinding tool 505 at the appropriate speed depending on the material so as to grind the workpiece W. Where the end face is ground, the linkage 300 revolves the grinding tool 505 about Y-axis so as to angularly grind the workpiece W (S108), as shown in Fig. 10(e). Fig. 10(e) shows plural grinding situations so that there are drawn a plurality-of the grinding tool 505. Then, the grinding process is completed and the grinding tool 505 is returned to the tool turret 403.

Finally, the surface finishing process takes place. The surface finishing tool 506 is attached to the tool spindle unit 200 (S109). The surface finishing tool 506 performs the surface finishing process (S110), e.g. super finishing, ELID grinding, lapping, polishing or buffing.

According to the above embodiment, the combined processing machine 1 is capable of plural kinds of processes from forming to finishing, although the processes are conventionally done by a plurality of single-process machines. Providing flexibility of the processes from forming to finishing, the combined processing machine 1 is applicable to high-variety and low-volume manufacturing, is able to minimize floor space and is able to integrate the processes. Using the linkage 300 with multi-degree freedom, the combined processing machine 1 provides light moving portions and position and attitude-controls the linkage 300 so as to achieve high-speed and high-precision processes and so as to integrate the processes.

Obviously, numerous modifications and variations of the present invention are possible in light of the above teachings. It is thereby to be understood that within the scope of the appended claims, the present invention may be practiced otherwise than as specifically described herein.

A combined processing machine 1 includes a workpiece supporter 100, a tool spindle unit 200, at least one tool 501a and a linkage 300 with multi-degrees of freedom. A workpiece W is set on the workpiece supporter 100. The tool 501a is attached to the tool spindle unit 200. The tool spindle unit 200 is mounted on the linkage 300. The linkage 300 is position and attitude-controlled in order to process the workpiece W.

## Claims

1. A combined processing machine comprising:
a bed;
a workpiece support mounted to the bed;
a tool spindle unit including a tool spindle adapted to clamp a tool; and
a plurality of tools adapted to be clamped by the tool spindle, wherein the plurality of tools include forming, heat treatment and finishing tools.

2. The combined processing machine according to claim 1, further comprising a CNC controller for controlling the position and attitude of the tool spindle unit.

3. The combined processing machine according to claim 1, wherein one of the plurality of tools is clamped to the tool spindle.

4. The combined processing machine according to claim 1, wherein the forming tools include lathing and cutting tools, and wherein the finishing tools include grinding and surface finishing tools.

5. The combined processing machine according to claim 1, further comprising an automatic tool changer adapted to store the plurality of tools, and to attach and remove a tool to or from the tool spindle.

6. A processing method using a combined processing machine comprising a bed, a workpiece support mounted to the bed, a tool spindle unit including a tool spindle adapted to clamp a tool, a plurality of tools adapted to be clamped by the tool spindle, wherein the plurality of tools include forming, heat treatment and finishing tools, the method comprising steps of:
setting a workpiece on the workpiece support;
selecting one of the tools corresponding to a selected process; and
processing the workpiece using the selected one of the tools using a forming process, a heat treatment process and a finishing process performed in sequence.

7. The processing method according to claim 6, wherein the method further comprising steps of:
attitude controlling the position and attitude of the tool spindle, wherein the attitude controlling step comprises controlling movement of the tool spindle unit in a first direction toward and away from the workpiece support, controlling movement of the tool spindle unit in a second direction perpendicular to the first direction, and controlling rotation of the tool spindle unit about an axis extending in a third direction perpendicular to the first and second directions.
